# EUROPEAN PATENT APPLICATION

(11) **EP 4 783 396 A1**
(43) Date of publication of application: **29.07.2026**
(21) Application number: 26153192.5
(22) Date of filing: 21.01.2026
(51) Int. Cl.: H02J 3/001, H02J 3/38, H02J 4/20

(54) **POWER CONVERTER, CONTROL METHOD FOR POWER CONVERTER, AND ENERGY STORAGE SYSTEM**

(30) Priority: 22.01.2025 CN 202510099746
(71) Applicant: Huawei Technologies Co., Ltd., Shenzhen, Guangdong 518129 (CN)
(72) Inventor: DING, Jian, Shenzhen, Guangdong 518129 (CN); GUO, Haibin, Shenzhen, Guangdong 518129 (CN); MENG, Yuandong, Shenzhen, Guangdong 518129 (CN); WU, Yihong, Shenzhen, Guangdong 518129 (CN)
(74) Representative: Maiwald GmbH

(57) **Abstract**

This application provides a power converter, a control method for the power converter, and an energy storage system. When high voltage ride-through occurs, a bus voltage is increased from a first voltage to a second voltage, and a direct current-to-direct current converter circuit adjusts a maximum output power to a first power based on a control signal, and outputs a power within a range in which the power is less than or equal to the maximum output power. An external characteristic of the direct current-to-direct current converter circuit is changed to stabilize the bus voltage and avoid oscillation of the bus voltage. The first power is greater than a second power, and the second power is a maximum output power of the direct current-to-direct current converter circuit existing when there is no the control signal and the bus voltage is the second voltage. The direct current-to-direct current converter circuit increases an output capability when the bus voltage is high, and the direct current-to-direct current converter circuit temporarily bears a high output power. This can reduce hardware costs of the system and avoid a waste of hardware resources.

## Description

### TECHNICAL FIELD

The present invention relates to the field of power electronics technologies, and in particular, to a power converter, a control method for the power converter, and an energy storage system.

### BACKGROUND

In a conventional two-stage energy storage system, a power converter connected between a direct current source and a power grid usually boosts and converts a direct current voltage of the direct current source into a bus voltage via a bidirectional boost (boost) circuit at a front stage of a direct current bus, and converts the bus voltage into an alternating current via an inverter (DC/AC) at a back stage of the direct current bus. When high voltage ride-through (high voltage ride through, HVRT) occurs in the power grid, in other words, when a voltage of the power grid temporarily increases to more than a percentage of a rated voltage due to a fault or another factor, it is necessary to ensure, within a period of time, that a power generation device keeps running grid-tied.

In a high voltage ride-through process of the power grid, the bus voltage of the direct current bus is pulled up due to an uncontrolled rectification function of the inverter as the voltage of the power grid increases. When the bus voltage exceeds a range within which a component in a boost circuit can normally operate, to prevent the component in the boost circuit from bearing a high power, the boost circuit decreases a maximum output power. The decrease of the maximum output power results in pull-down of the bus voltage. When the bus voltage decreases to the range within which the boost circuit normally operates, the boost circuit restores the maximum output power, so that the bus voltage increases again. The foregoing process is repeated, resulting in oscillation of the bus voltage and system instability.

### SUMMARY

This application provides a power converter, a control method for the power converter, and an energy storage system, to stabilize a bus voltage during high voltage ride-through.

According to a first aspect, this application provides a power converter, including a direct current-to-direct current converter circuit, a direct current bus, and a direct current-to-alternating current converter circuit. One end of the direct current-to-direct current converter circuit is configured to connect to a direct current source. The direct current source may be specifically a photovoltaic module or an energy storage battery. The other end of the direct current-to-direct current converter circuit is connected to one end of the direct current-to-alternating current converter circuit through the direct current bus. The other end of the direct current-to-alternating current converter circuit is configured to connect to a power grid or a load. The direct current-to-direct current converter circuit is configured to perform voltage conversion on electric energy from a photovoltaic module or an energy storage battery and output a converted voltage to the direct current bus. The direct current-to-alternating current converter circuit is configured to convert a bus voltage of the direct current bus into an alternating current and output the alternating current to a power grid.

When the power grid is normal, in other words, when a voltage of the power grid is a rated voltage, where the rated voltage may be a specified voltage range, for example, ±10% of 220 V is a case in which the power grid is normal, the bus voltage of the direct current bus is a first voltage due to an uncontrolled rectification function of the direct current-to-alternating current converter circuit. The first voltage is, for example, 800 V.

When high voltage ride-through occurs in the power grid, in other words, when the voltage of the power grid increases to be greater than a first multiple of the rated voltage, for example, when the voltage of the power grid increases to more than 110% of 220 V, the bus voltage increases with the increase of the voltage of the power grid due to the uncontrolled rectification function of the direct current-to-alternating current converter circuit. Specifically, the bus voltage increases from the first voltage existing when the power grid is normal to a second voltage, for example, increases from 800 V to 900 V. In this case, if an external characteristic of the direct current-to-direct current converter circuit is not changed, because the second voltage exceeds a range within which a component in the direct current-to-direct current converter circuit can normally operate, to prevent the component from bearing a high power, the direct current-to-direct current converter circuit decreases a maximum output power, for example, decreases the maximum output power from 100 kW to 80 kW. The direct current-to-direct current converter circuit needs to output a power within a range within which the power is less than or equal to the maximum output power. The decrease of the maximum output power results in a decrease of the bus voltage. For example, the bus voltage decreases from 900 V to 800 V. When the bus voltage decreases to the range within which the direct current-to-direct current converter circuit normally operates, the direct current-to-direct current converter circuit restores the maximum output power, for example, restores the maximum output power from 80 kW to 100 kW, so that the bus voltage increases again. For example, the bus voltage increases from 800 V to 900 V. The foregoing process is repeated, resulting in oscillation of the bus voltage and system instability.

In this embodiment of this application, when high voltage ride-through occurs in the power grid, for example, when the voltage of the power grid is 1.1 times of 220 V, the direct current-to-direct current converter circuit switches to an external characteristic during high voltage ride-through based on a control signal. In other words, the direct current-to-direct current converter circuit does not decrease the maximum output power based on the control signal. For example, the maximum output power is kept at 100 kW before high voltage ride-through occurs, to stabilize the bus voltage. For example, the bus voltage is stabilized at 900 V, to avoid oscillation of the bus voltage and stabilize a system. Specifically, when the voltage of the power grid increases to be greater than a first multiple of the rated voltage, in other words, when high voltage ride-through occurs in the power grid, the direct current-to-direct current converter circuit adjusts the maximum output power to a first power based on the received control signal, so that the direct current-to-direct current converter circuit outputs a power within a range within which the power is less than or equal to the maximum output power. The first power needs to be greater than a second power. For example, the first power is 100 kW, and the second power is 80 kW. The second power is the maximum output power reduced by the direct current-to-direct current converter circuit existing when no control signal is received and the bus voltage is the second voltage. The second power may also be understood as a maximum output power of the direct current-to-direct current converter circuit existing when the bus voltage is set to the second voltage and when the power grid is normal, in other words, when the voltage of the power grid is the rated voltage. Because the second voltage exceeds the range within which the component in the direct current-to-direct current converter circuit can normally operate, to prevent the component from bearing the high power, the direct current-to-direct current converter circuit decreases the maximum output power, for example, decreases the maximum output power, namely, the second power, from 100 kW to 80 kW, so that the direct current-to-direct current converter circuit outputs a power within a range within which the power is less than or equal to the second power, that is, 80 kW.

In this application, during high voltage ride-through of the power grid, the direct current-to-direct current converter circuit increases an output capability, that is, the maximum output power, based on the control signal when the bus voltage is high. The direct current-to-direct current converter circuit temporarily bears a high maximum output power. This can reduce hardware costs of the system and avoid a waste of hardware resources.

In some embodiments of this application, when high voltage ride-through occurs in the power grid, after the direct current-to-direct current converter circuit switches to the external characteristic during high voltage ride-through, the direct current-to-direct current converter circuit may be controlled not to decrease the maximum output power. Specifically, the maximum output power of the direct current-to-direct current converter circuit may be kept not less than the maximum output power existing when the power grid is normal. For example, when the power grid is normal before high voltage ride-through occurs, in other words, when the voltage of the power grid is the rated voltage, and when the bus voltage is the first voltage, the maximum output power of the direct current-to-direct current converter circuit is a third power. In this case, when high voltage ride-through occurs, in other words, after the bus voltage increases, the direct current-to-direct current converter circuit may control, based on the control signal, the maximum output power, namely, the first power, to be greater than or equal to the third power, for example, both the maximum output power and the third power are 100 kW, to ensure stability of a system load during switching of the power grid from a normal state to high voltage ride-through. In this application, the direct current-to-alternating current converter circuit connected to the power grid may be used to collect the voltage of the power grid, determine a level of high voltage ride-through of the power grid, and then send a corresponding high voltage ride-through flag to the direct current-to-alternating current converter circuit as the control signal. After receiving the high voltage ride-through flag, that is, the control signal, the direct current-to-alternating current converter circuit switches to the external characteristic during high voltage ride-through, in other words, adjusts the maximum output power to the first power, to increase the output capability and avoid oscillation of the bus voltage. After the high voltage ride-through flag disappears, a normal external characteristic is restored, and the maximum output power is adjusted to the third power, to ensure the stability of the system load during switching of the power grid from the normal state to high voltage ride-through.

In this application, when high voltage ride-through occurs in the power grid, a percentage by which the bus voltage increases varies as the voltage of the power grid increases to be greater than different multiples of the rated voltage. When the voltage of the power grid increases to different multiples of the rated voltage, the direct current-to-direct current converter circuit may keep a fixed maximum output power, namely, the first power. Specifically, when the voltage of the power grid increases to be greater than the first multiple of the rated voltage, and when the voltage of the power grid increases to be greater than a second multiple of the rated voltage, the direct current-to-direct current converter circuit controls the maximum output power to be the fixed first power. For example, when the voltage of the power grid is the first multiple, namely, 1.2 times, of the rated voltage, and the second multiple, namely, 1.3 times, of the rated voltage, the maximum output power, namely, the first power, of the direct current-to-direct current converter circuit may be controlled to be the same as the third power, that is, 100 kW, to ensure the stability of the system load during switching of the power grid from the normal state to high voltage ride-through.

In some embodiments of this application, when high voltage ride-through occurs in the power grid, the direct current-to-alternating current converter circuit may increase the maximum output power within a short period of time to bear a high output power. To be specific, when the voltage of the power grid increases to be greater than the first multiple of the rated voltage, the direct current-to-alternating current converter circuit adjusts the maximum output power to the first power within first duration. If the power grid is not restored to normal after the first duration, the maximum output power of the direct current-to-alternating current converter circuit needs to be decreased, to prevent a component in the direct current-to-alternating current converter circuit from being damaged due to overload. The direct current-to-alternating current converter circuit adjusts the maximum output power to a fourth power, where the fourth power is less than the first power, to ensure safe use of the component in the direct current-to-alternating current converter circuit.

In some embodiments of this application, when high voltage ride-through of different levels occurs in the power grid, the direct current-to-alternating current converter circuit may be controlled to keep external characteristics during high voltage ride-through for different duration. In other words, the duration within which the maximum output power is the first power is different. Specifically, when the voltage of the power grid increases to be greater than the first multiple of the rated voltage, the direct current-to-alternating current converter circuit adjusts the maximum output power to the first power within the first duration, and adjusts the maximum output power to the fourth power after the first duration. When the voltage of the power grid increases to be greater than the second multiple of the rated voltage, the direct current-to-alternating current converter circuit adjusts the maximum output power to the first power within second duration, and adjusts the maximum output power to the fourth power after the second duration. The first multiple is greater than the second multiple, and the first duration is less than the second duration. In other words, a higher high voltage ride-through level indicates shorter duration within which the direct current-to-alternating current converter circuit keeps the external characteristic during high voltage ride-through. For example, when the voltage of the power grid increases to more than 110% to 120% of the rated voltage, the direct current-to-alternating current converter circuit may keep adjusting the maximum output power to the first power for not less than 10s; when the voltage of the power grid increases to more than 120% to 125% of the rated voltage, the direct current-to-alternating current converter circuit may keep adjusting the maximum output power to the first power for not less than 1s; and when the voltage of the power grid increases to more than 125% to 130% of the rated voltage, the direct current-to-alternating current converter circuit may keep adjusting the maximum output power to the first power for not less than 500 ms.

According to a second aspect, an embodiment of this application provides a control method for a power converter. The control method may specifically include the following steps.

When a power grid is normal, in other words, when a voltage of the power grid is a rated voltage, where the rated voltage may be a specified voltage range, for example, ±10% of 220 V is a case in which the power grid is normal, a bus voltage of a direct current bus is a first voltage due to an uncontrolled rectification function of a direct current-to-alternating current converter circuit in the power converter. In other words, the direct current-to-alternating current converter circuit in the power converter controls the bus voltage of the direct current bus in the power converter to be the first voltage. For example, the first voltage is 800 V.

When high voltage ride-through occurs in the power grid, in other words, when the voltage of the power grid increases to be greater than a first multiple of the rated voltage, for example, when the voltage of the power grid increases to more than 110% of 220 V, the bus voltage increases with the increase of the voltage of the power grid due to the uncontrolled rectification function of the direct current-to-alternating current converter circuit. Specifically, the bus voltage increases from the first voltage existing when the power grid is normal to a second voltage, for example, increases from 800 V to 900 V. In this case, if an external characteristic of a direct current-to-direct current converter circuit is not changed, because the second voltage exceeds a range within which a component in the direct current-to-direct current converter circuit can normally operate, to prevent the component from bearing a high power, the direct current-to-direct current converter circuit decreases a maximum output power, for example, decreases the maximum output power from 100 kW to 80 kW. The direct current-to-direct current converter circuit needs to output a power within a range within which the power is less than or equal to the maximum output power. The decrease of the maximum output power results in a decrease of the bus voltage. For example, the bus voltage decreases from 900 V to 800 V. When the bus voltage decreases to the range within which the direct current-to-direct current converter circuit normally operates, the direct current-to-direct current converter circuit restores the maximum output power, for example, restores the maximum output power from 80 kW to 100 kW, so that the bus voltage increases again. For example, the bus voltage increases from 800 V to 900 V. The foregoing process is repeated, resulting in oscillation of the bus voltage and system instability.

In this embodiment of this application, when high voltage ride-through occurs in the power grid, for example, when the voltage of the power grid is 1.1 times of 220 V, the direct current-to-direct current converter circuit switches to an external characteristic during high voltage ride-through based on a control signal. In other words, the direct current-to-direct current converter circuit does not decrease the maximum output power based on the control signal. For example, the maximum output power is kept at 100 kW before high voltage ride-through occurs, to stabilize the bus voltage. For example, the bus voltage is stabilized at 900 V, to avoid oscillation of the bus voltage and stabilize a system. Specifically, when the voltage of the power grid increases to be greater than a first multiple of the rated voltage, in other words, when high voltage ride-through occurs in the power grid, the direct current-to-direct current converter circuit adjusts the maximum output power to a first power based on the received control signal, so that the direct current-to-direct current converter circuit outputs a power within a range within which the power is less than or equal to the maximum output power. The first power needs to be greater than a second power. For example, the first power is 100 kW, and the second power is 80 kW. The second power is the maximum output power reduced by the direct current-to-direct current converter circuit existing when no control signal is received and the bus voltage is the second voltage. The second power may also be understood as a maximum output power of the direct current-to-direct current converter circuit existing when the bus voltage is set to the second voltage and when the power grid is normal, in other words, when the voltage of the power grid is the rated voltage. Because the second voltage exceeds the range within which the component in the direct current-to-direct current converter circuit can normally operate, to prevent the component from bearing the high power, the direct current-to-direct current converter circuit decreases the maximum output power, for example, decreases the maximum output power, namely, the second power, from 100 kW to 80 kW, so that the direct current-to-direct current converter circuit outputs a power within a range within which the power is less than or equal to the second power, that is, 80 kW.

In this application, during high voltage ride-through of the power grid, the direct current-to-direct current converter circuit is controlled to increase an output capability, that is, the maximum output power, based on the control signal when the bus voltage is high. The direct current-to-direct current converter circuit temporarily bears a high output power. This can reduce hardware costs of the system and avoid a waste of hardware resources.

In some embodiments of this application, when high voltage ride-through occurs in the power grid, after the direct current-to-direct current converter circuit switches to an external characteristic during high voltage ride-through, the direct current-to-direct current converter circuit may be controlled not to decrease the maximum output power. Specifically, the maximum output power of the direct current-to-direct current converter circuit may be kept not less than the maximum output power existing when the power grid is normal. For example, when the power grid is normal before high voltage ride-through occurs, in other words, when the voltage of the power grid is the rated voltage, and when the bus voltage is the first voltage, the maximum output power of the direct current-to-direct current converter circuit is a third power. In this case, when high voltage ride-through occurs, in other words, after the bus voltage increases, the direct current-to-direct current converter circuit may control, based on the control signal, the maximum output power, namely, the first power, to be greater than or equal to the third power, for example, both the maximum output power and the third power are 100 kW, to ensure stability of a system load during switching of the power grid from a normal state to high voltage ride-through.

In this application, the direct current-to-alternating current converter circuit connected to the power grid may be used to collect the voltage of the power grid, determine a level of high voltage ride-through of the power grid, and then send a corresponding high voltage ride-through flag to the direct current-to-alternating current converter circuit as the control signal. After receiving the high voltage ride-through flag, that is, the control signal, the direct current-to-alternating current converter circuit switches to the external characteristic during high voltage ride-through, in other words, adjusts the maximum output power to the first power, to increase the output capability and avoid oscillation of the bus voltage. After the high voltage ride-through flag disappears, a normal external characteristic is restored, and the maximum output power is adjusted to the third power, to ensure the stability of the system load during switching of the power grid from the normal state to high voltage ride-through.

In this application, when high voltage ride-through occurs in the power grid, a percentage by which the bus voltage increases varies as the voltage of the power grid increases to be greater than different multiples of the rated voltage. When the voltage of the power grid increases to different multiples of the rated voltage, the direct current-to-direct current converter circuit may keep a fixed maximum output power, namely, the first power. Specifically, when the voltage of the power grid increases to be greater than the first multiple of the rated voltage, and when the voltage of the power grid increases to be greater than a second multiple of the rated voltage, the direct current-to-direct current converter circuit controls the maximum output power to be the fixed first power. For example, when the voltage of the power grid is the first multiple, namely, 1.2 times, of the rated voltage, and the second multiple, namely, 1.3 times, of the rated voltage, the maximum output power, namely, the first power, of the direct current-to-direct current converter circuit may be controlled to be the same as the third power, that is, 100 kW, to ensure the stability of the system load during switching of the power grid from the normal state to high voltage ride-through.

In some embodiments of this application, when high voltage ride-through occurs in the power grid, the direct current-to-alternating current converter circuit may increase the maximum output power within a short period of time to bear a high output power. To be specific, when the voltage of the power grid increases to be greater than the first multiple of the rated voltage, the direct current-to-alternating current converter circuit adjusts the maximum output power to the first power within first duration. If the power grid is not restored to normal after the first duration, the maximum output power of the direct current-to-alternating current converter circuit needs to be decreased, to prevent a component in the direct current-to-alternating current converter circuit from being damaged due to overload. The direct current-to-alternating current converter circuit adjusts the maximum output power to a fourth power, where the fourth power is less than the first power, to ensure safe use of the component in the direct current-to-alternating current converter circuit.

In some embodiments of this application, when high voltage ride-through of different levels occurs in the power grid, the direct current-to-alternating current converter circuit may be controlled to keep external characteristics during high voltage ride-through for different duration. In other words, the duration within which the maximum output power is the first power is different. Specifically, when the voltage of the power grid increases to be greater than the first multiple of the rated voltage, the direct current-to-alternating current converter circuit adjusts the maximum output power to the first power within the first duration, and adjusts the maximum output power to the fourth power after the first duration. When the voltage of the power grid increases to be greater than the second multiple of the rated voltage, the direct current-to-alternating current converter circuit adjusts the maximum output power to the first power within second duration, and adjusts the maximum output power to the fourth power after the second duration. The first multiple is greater than the second multiple, and the first duration is less than the second duration. In other words, a higher high voltage ride-through level indicates shorter duration within which the direct current-to-alternating current converter circuit keeps the external characteristic during high voltage ride-through. For example, when the voltage of the power grid increases to more than 110% to 120% of the rated voltage, the direct current-to-alternating current converter circuit may keep adjusting the maximum output power to the first power for not less than 10s; when the voltage of the power grid increases to more than 120% to 125% of the rated voltage, the direct current-to-alternating current converter circuit may keep adjusting the maximum output power to the first power for not less than 1s; and when the voltage of the power grid increases to more than 125% to 130% of the rated voltage, the direct current-to-alternating current converter circuit may keep adjusting the maximum output power to the first power for not less than 500 ms.

According to a third aspect, an embodiment of this application provides an energy storage system, including an energy storage battery and the power converter provided in the first aspect. The power converter is connected to the energy storage battery, and the power converter is configured to: convert electric energy provided by the energy storage battery into an alternating current and output the alternating current to a power grid or a load.

For technical effect that can be achieved by any possible design in the second aspect and the third aspect, refer to the technical effect that can be achieved by any possible design in the first aspect. Details are not described herein again. These aspects or other aspects of this application are clearer and more comprehensible in descriptions of the following embodiments.

### BRIEF DESCRIPTION OF DRAWINGS

FIG. 1 is a diagram of a bus voltage of a power converter in the conventional technology during high voltage ride-through of a power grid;
FIG. 2 is a diagram of a structure of a power converter according to an embodiment of this application;
FIG. 3 is a diagram of a bus voltage of a power converter during high voltage ride-through of a power grid according to an embodiment of this application; and
FIG. 4 is a diagram of comparison between maximum output powers of direct current-to-direct current converter circuits in power converters during high voltage ride-through of a power grid.

### DESCRIPTION OF EMBODIMENTS

To make objectives, technical solutions, and advantages of this application clearer, the following further describes this application in detail with reference to accompanying drawings. However, example implementations may be implemented in a plurality of forms and should not be construed as being limited to implementations described herein. On the contrary, these implementations are provided to make this application more comprehensive and complete and fully conveys the concept of the example implementations to a person skilled in the art.

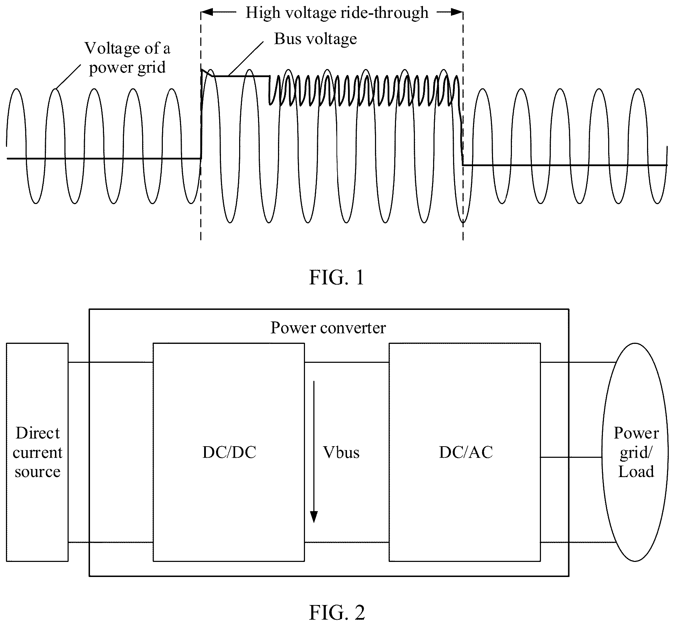

Refer to FIG. 1. Currently, in a high voltage ride-through process of a power grid, a bus voltage of a direct current bus is pulled up due to an uncontrolled rectification function of an inverter in a power converter as a voltage of the power grid increases. When the bus voltage exceeds a range within which a component in a boost circuit can normally operate, to prevent the component in the boost circuit from bearing a high power, the boost circuit decreases a maximum output power. The decrease of the maximum output power results in a decrease of the bus voltage. When the bus voltage decreases to the range within which the boost circuit normally operates, the boost circuit restores the maximum output power, so that the bus voltage increases again. The foregoing process is repeated, resulting in oscillation of the bus voltage and system instability.

In view of this, embodiments of this application provide a power converter, a control method for the power converter, and an energy storage system. During high voltage ride-through, an external characteristic of a front-stage direct current-to-direct current (DC/DC) converter circuit in the power converter is changed, so that the DC/DC circuit does not decrease a maximum output power. This can avoid oscillation of a bus voltage. The DC/DC circuit is controlled to increase an output capability when the bus voltage is high, and the direct current-to-direct current (DC/DC) converter circuit temporarily bears a high output power. This can reduce hardware costs of the system and avoid a waste of hardware resources.

FIG. 2 shows a power converter according to an embodiment of this application. The power converter includes a direct current-to-direct current (DC/DC) converter circuit, a direct current bus, and a direct current-to-alternating current (DC/AC) converter circuit. One end of the direct current-to-direct current (DC/DC) converter circuit is configured to connect to a direct current source. The direct current source may be specifically a photovoltaic module or an energy storage battery. The other end of the direct current-to-direct current (DC/DC) converter circuit is connected to one end of the direct current-to-alternating current (DC/AC) converter circuit through the direct current bus. The other end of the direct current-to-alternating current (DC/AC) converter circuit is configured to connect to a power grid or a load. The direct current-to-direct current (DC/DC) converter circuit is configured to perform voltage conversion on electric energy from the photovoltaic module or the energy storage battery and output a converted voltage to the direct current bus. The direct current-to-alternating current (DC/AC) converter circuit is configured to convert a bus voltage Vbus of the direct current bus into an alternating current and output the alternating current to the power grid.

When the power grid is normal, in other words, when a voltage of the power grid is a rated voltage, where the rated voltage may be in a specified voltage range, for example, ±10% of 220 V is a case in which the power grid is normal, the bus voltage of the direct current bus is a first voltage due to an uncontrolled rectification function of the direct current-to-alternating current (DC/AC) converter circuit. The first voltage is, for example, 800 V.

When high voltage ride-through occurs in the power grid, in other words, when the voltage of the power grid increases to be greater than a first multiple of the rated voltage, for example, when the voltage of the power grid increases to more than 110% of 220 V, the bus voltage increases with the increase of the voltage of the power grid due to the uncontrolled rectification function of the direct current-to-alternating current (DC/AC) converter circuit. Specifically, the bus voltage increases from the first voltage existing when the power grid is normal to a second voltage, for example, increases from 800 V to 900 V. In this case, if an external characteristic of the direct current-to-direct current (DC/DC) converter circuit is not changed, because the second voltage exceeds a range within which a component in the direct current-to-direct current (DC/DC) converter circuit can normally operate, to prevent the component from bearing a high power, the direct current-to-direct current (DC/DC) converter circuit decreases a maximum output power, for example, decreases the maximum output power from 100 kW to 80 kW. The direct current-to-direct current converter circuit needs to output a power within a range within which the power is less than or equal to the maximum output power. The decrease of the maximum output power results in a decrease of the bus voltage. For example, the bus voltage decreases from 900 V to 800 V. When the bus voltage decreases to the range within which the direct current-to-direct current (DC/DC) converter circuit normally operates, the direct current-to-direct current (DC/DC) converter circuit restores the maximum output power, for example, restores the maximum output power from 80 kW to 100 kW, so that the bus voltage increases again. For example, the bus voltage increases from 800 V to 900 V. The foregoing process is repeated, resulting in oscillation of the bus voltage and system instability.

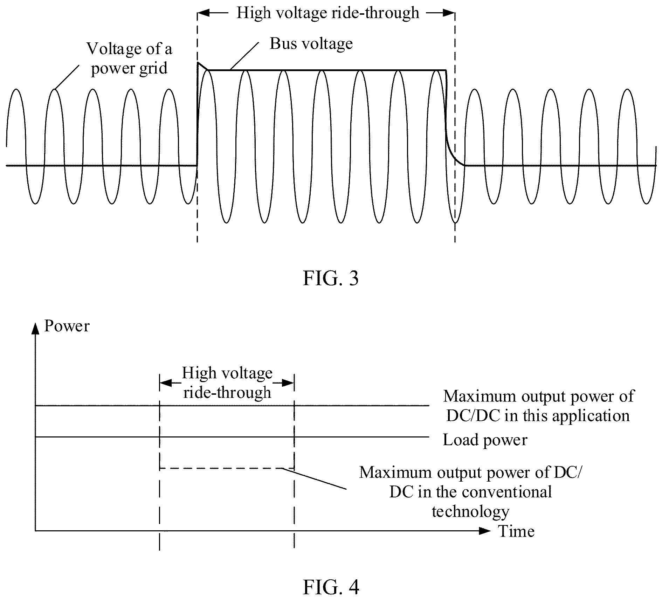

Refer to FIG. 3. In this embodiment of this application, when high voltage ride-through occurs in the power grid, for example, when the voltage of the power grid is 1.1 times of 220 V, the direct current-to-direct current (DC/DC) converter circuit switches to an external characteristic during high voltage ride-through based on a control signal. In other words, the direct current-to-direct current (DC/DC) converter circuit does not decrease the maximum output power based on the control signal. For example, the maximum output power is kept at 100 kW before high voltage ride-through occurs, to stabilize the bus voltage. For example, the bus voltage is stabilized at 900 V, to avoid oscillation of the bus voltage and stabilize a system. Specifically, when the voltage of the power grid increases to be greater than the first multiple of the rated voltage, in other words, when high voltage ride-through occurs in the power grid, the direct current-to-direct current (DC/DC) converter circuit adjusts the maximum output power to a first power based on the received control signal, so that the direct current-to-direct current (DC/DC) converter circuit outputs the power within the range within which the power is less than or equal to the maximum output power. The first power needs to be greater than a second power. For example, the first power is 100 kW, and the second power is 80 kW. The second power is the maximum output power reduced by the direct current-to-direct current converter circuit existing when no control signal is received and the bus voltage is the second voltage. The second power may also be understood as a maximum output power of the direct current-to-direct current converter circuit existing when the bus voltage is set to the second voltage and when the power grid is normal, in other words, when the voltage of the power grid is the rated voltage. Because the second voltage exceeds the range within which the component in the direct current-to-direct current (DC/DC) converter circuit can normally operate, to prevent the component from bearing the high power, the direct current-to-direct current (DC/DC) converter circuit decreases the maximum output power, for example, decreases the maximum output power, namely, the second power, from 100 kW to 80 kW, so that the direct current-to-direct current converter circuit outputs a power within a range within which the power is less than or equal to the second power, that is, 80 kW.

In this application, during high voltage ride-through of the power grid, the direct current-to-direct current (DC/DC) converter circuit increases an output capability, that is, the maximum output power, based on the control signal when the bus voltage is high. The direct current-to-direct current (DC/DC) converter circuit temporarily bears a high maximum output power. This can reduce hardware costs of the system and avoid a waste of hardware resources.

Refer to FIG. 4. In some embodiments of this application, when high voltage ride-through occurs in the power grid, after the direct current-to-direct current (DC/DC) converter circuit switches to the external characteristic during high voltage ride-through, the direct current-to-direct current (DC/DC) converter circuit may be controlled not to decrease the maximum output power. Specifically, the maximum output power of the direct current-to-direct current (DC/DC) converter circuit may be kept not less than the maximum output power existing when the power grid is normal. For example, when the power grid is normal before high voltage ride-through occurs, in other words, when the voltage of the power grid is the rated voltage, and when the bus voltage is the first voltage, the maximum output power of the direct current-to-direct current (DC/DC) converter circuit is a third power. In this case, when high voltage ride-through occurs, in other words, after the bus voltage increases, the direct current-to-direct current (DC/DC) converter circuit may control, based on the control signal, the maximum output power, namely, the first power, to be greater than or equal to the third power, for example, both the maximum output power and the third power are 100 kW, to ensure stability of a system load during switching of the power grid from a normal state to high voltage ride-through.

In this application, the direct current-to-alternating current converter circuit (DC/AC) connected to the power grid may be used to collect the voltage of the power grid, determine a level of high voltage ride-through of the power grid, and then send a corresponding high voltage ride-through flag to the direct current-to-alternating current (DC/DC) converter circuit as the control signal. After receiving the high voltage ride-through flag, that is, the control signal, the direct current-to-alternating current (DC/DC) converter circuit switches to the external characteristic during high voltage ride-through, in other words, adjusts the maximum output power to the first power, to increase the output capability and avoid oscillation of the bus voltage. After the high voltage ride-through flag disappears, a normal external characteristic is restored, and the maximum output power is adjusted to the third power, to ensure the stability of the system load during switching of the power grid from the normal state to high voltage ride-through.

In this application, when high voltage ride-through occurs in the power grid, a percentage by which the bus voltage increases varies as the voltage of the power grid increases to be greater than different multiples of the rated voltage. When the voltage of the power grid increases to different multiples of the rated voltage, the direct current-to-direct current (DC/DC) converter circuit may keep a fixed maximum output power, namely, the first power. Specifically, when the voltage of the power grid increases to be greater than the first multiple of the rated voltage, and when the voltage of the power grid increases to be greater than a second multiple of the rated voltage, the direct current-to-direct current (DC/DC) converter circuit controls the maximum output power to be the fixed first power. For example, when the voltage of the power grid is the first multiple, namely, 1.2 times, of the rated voltage, and the second multiple, namely, 1.3 times, of the rated voltage, the maximum output power, namely, the first power, of the direct current-to-direct current (DC/DC) converter circuit may be controlled to be the same as the third power, that is, 100 kW, to ensure the stability of the system load during switching of the power grid from the normal state to high voltage ride-through.

In some embodiments of this application, when high voltage ride-through occurs in the power grid, the direct current-to-alternating current (DC/DC) converter circuit may increase the maximum output power within a short period of time to bear a high output power. To be specific, when the voltage of the power grid increases to be greater than the first multiple of the rated voltage, the direct current-to-alternating current (DC/DC) converter circuit adjusts the maximum output power to the first power within first duration. If the power grid is not restored to normal after the first duration, the maximum output power of the direct current-to-alternating current (DC/DC) converter circuit needs to be decreased, to prevent a component in the direct current-to-alternating current (DC/DC) converter circuit from being damaged due to overload. The direct current-to-alternating current (DC/DC) converter circuit adjusts the maximum output power to a fourth power, where the fourth power is less than the first power, to ensure safe use of the component in the direct current-to-alternating current (DC/DC) converter circuit.

In some embodiments of this application, when high voltage ride-through of different levels occurs in the power grid, the direct current-to-alternating current (DC/DC) converter circuit may be controlled to keep external characteristics during high voltage ride-through for different duration. In other words, the duration within which the maximum output power is the first power is different. Specifically, when the voltage of the power grid increases to be greater than the first multiple of the rated voltage, the direct current-to-alternating current converter circuit adjusts the maximum output power to the first power within the first duration, and adjusts the maximum output power to the fourth power after the first duration. When the voltage of the power grid increases to be greater than the second multiple of the rated voltage, the direct current-to-alternating current converter circuit adjusts the maximum output power to the first power within second duration, and adjusts the maximum output power to the fourth power after the second duration. The first multiple is greater than the second multiple, and the first duration is less than the second duration. In other words, a higher high voltage ride-through level indicates shorter duration within which the direct current-to-alternating current (DC/ DC) converter circuit keeps the external characteristic during high voltage ride-through. For example, when the voltage of the power grid increases to more than 110% to 120% of the rated voltage, the direct current-to-alternating current (DC/DC) converter circuit may keep adjusting the maximum output power to the first power for not less than 10s; when the voltage of the power grid increases to more than 120% to 125% of the rated voltage, the direct current-to-alternating current (DC/DC) converter circuit may keep adjusting the maximum output power to the first power for not less than 1s; and when the voltage of the power grid increases to more than 125% to 130% of the rated voltage, the direct current-to-alternating current (DC/DC) converter circuit may keep adjusting the maximum output power to the first power for not less than 500 ms.

Based on a same inventive concept, an embodiment of this application further provides a control method for a power converter. The control method may specifically include the following steps.

When a power grid is normal, in other words, when a voltage of the power grid is a rated voltage, where the rated voltage may be a specified voltage range, for example, ±10% of 220 V is a case in which the power grid is normal, a bus voltage of a direct current bus is a first voltage due to an uncontrolled rectification function of a direct current-to-alternating current converter circuit in the power converter. In other words, the direct current-to-alternating current converter circuit in the power converter controls the bus voltage of the direct current bus in the power converter to be the first voltage. For example, the first voltage is 800 V.

When high voltage ride-through occurs in the power grid, in other words, when the voltage of the power grid increases to be greater than a first multiple of the rated voltage, for example, when the voltage of the power grid increases to more than 110% of 220 V, the bus voltage increases with the increase of the voltage of the power grid due to the uncontrolled rectification function of the direct current-to-alternating current converter circuit. Specifically, the bus voltage increases from the first voltage existing when the power grid is normal to a second voltage, for example, increases from 800 V to 900 V. In this case, if an external characteristic of a direct current-to-direct current converter circuit is not changed, because the second voltage exceeds a range within which a component in the direct current-to-direct current converter circuit can normally operate, to prevent the component from bearing a high power, the direct current-to-direct current converter circuit decreases a maximum output power, for example, decreases the maximum output power from 100 kW to 80 kW. The direct current-to-direct current converter circuit needs to output a power within a range within which the power is less than or equal to the maximum output power. The decrease of the maximum output power results in a decrease of the bus voltage. For example, the bus voltage decreases from 900 V to 800 V. When the bus voltage decreases to the range within which the direct current-to-direct current converter circuit normally operates, the direct current-to-direct current converter circuit restores the maximum output power, for example, restores the maximum output power from 80 kW to 100 kW, so that the bus voltage increases again. For example, the bus voltage increases from 800 V to 900 V. The foregoing process is repeated, resulting in oscillation of the bus voltage and system instability.

In this embodiment of this application, when high voltage ride-through occurs in the power grid, for example, when the voltage of the power grid is 1.1 times of 220 V, the direct current-to-direct current converter circuit switches to an external characteristic during high voltage ride-through based on a control signal. In other words, the direct current-to-direct current converter circuit does not decrease the maximum output power based on the control signal. For example, the maximum output power is kept at 100 kW before high voltage ride-through occurs, to stabilize the bus voltage. For example, the bus voltage is stabilized at 900 V, to avoid oscillation of the bus voltage and stabilize a system. Specifically, when the voltage of the power grid increases to be greater than a first multiple of the rated voltage, in other words, when high voltage ride-through occurs in the power grid, the direct current-to-direct current converter circuit adjusts the maximum output power to a first power based on the received control signal, so that the direct current-to-direct current converter circuit outputs the power within the range within which the power is less than or equal to the maximum output power. The first power needs to be greater than a second power. For example, the first power is 100 kW, and the second power is 80 kW. The second power is the maximum output power reduced by the direct current-to-direct current converter circuit existing when no control signal is received and the bus voltage is the second voltage. The second power may also be understood as a maximum output power of the direct current-to-direct current converter circuit existing when the bus voltage is set to the second voltage and when the power grid is normal, in other words, when the voltage of the power grid is the rated voltage. Because the second voltage exceeds the range within which the component in the direct current-to-direct current converter circuit can normally operate, to prevent the component from bearing the high power, the direct current-to-direct current converter circuit decreases the maximum output power, for example, decreases the maximum output power, namely, the second power, from 100 kW to 80 kW, so that the direct current-to-direct current converter circuit outputs a power within a range within which the power is less than or equal to the second power, that is, 80 kW.

In this application, during high voltage ride-through of the power grid, the direct current-to-direct current converter circuit is controlled to increase an output capability, that is, the maximum output power, based on the control signal when the bus voltage is high. The direct current-to-direct current converter circuit temporarily bears a high output power. This can reduce hardware costs of the system and avoid a waste of hardware resources.

In some embodiments of this application, when high voltage ride-through occurs in the power grid, after the direct current-to-direct current converter circuit switches to an external characteristic during high voltage ride-through, the direct current-to-direct current converter circuit may be controlled not to decrease the maximum output power. Specifically, the maximum output power of the direct current-to-direct current converter circuit may be kept not less than the maximum output power existing when the power grid is normal. For example, when the power grid is normal before high voltage ride-through occurs, in other words, when the voltage of the power grid is the rated voltage, and when the bus voltage is the first voltage, the maximum output power of the direct current-to-direct current converter circuit is a third power. In this case, when high voltage ride-through occurs, in other words, after the bus voltage increases, the direct current-to-direct current converter circuit may control, based on the control signal, the maximum output power, namely, the first power, to be greater than or equal to the third power, for example, both the maximum output power and the third power are 100 kW, to ensure stability of a system load during switching of the power grid from a normal state to high voltage ride-through.

In this application, the direct current-to-alternating current converter circuit connected to the power grid may be used to collect the voltage of the power grid, determine a level of high voltage ride-through of the power grid, and then send a corresponding high voltage ride-through flag to the direct current-to-alternating current converter circuit as the control signal. After receiving the high voltage ride-through flag, that is, the control signal, the direct current-to-alternating current converter circuit switches to the external characteristic during high voltage ride-through, in other words, adjusts the maximum output power to the first power, to increase the output capability and avoid oscillation of the bus voltage. After the high voltage ride-through flag disappears, a normal external characteristic is restored, and the maximum output power is adjusted to the third power, to ensure the stability of the system load during switching of the power grid from the normal state to high voltage ride-through.

In this application, when high voltage ride-through occurs in the power grid, a percentage by which the bus voltage increases varies as the voltage of the power grid increases to be greater than different multiples of the rated voltage. When the voltage of the power grid increases to different multiples of the rated voltage, the direct current-to-direct current converter circuit may keep a fixed maximum output power, namely, the first power. Specifically, when the voltage of the power grid increases to be greater than the first multiple of the rated voltage, and when the voltage of the power grid increases to be greater than a second multiple of the rated voltage, the direct current-to-direct current converter circuit controls the maximum output power to be the fixed first power. For example, when the voltage of the power grid is the first multiple, namely, 1.2 times, of the rated voltage, and the second multiple, namely, 1.3 times, of the rated voltage, the maximum output power, namely, the first power, of the direct current-to-direct current converter circuit may be controlled to be the same as the third power, that is, 100 kW, to ensure the stability of the system load during switching of the power grid from the normal state to high voltage ride-through.

In some embodiments of this application, when high voltage ride-through occurs in the power grid, the direct current-to-alternating current converter circuit may increase the maximum output power within a short period of time to bear a high output power. To be specific, when the voltage of the power grid increases to be greater than the first multiple of the rated voltage, the direct current-to-alternating current converter circuit adjusts the maximum output power to the first power within first duration. If the power grid is not restored to normal after the first duration, the maximum output power of the direct current-to-alternating current converter circuit needs to be decreased, to prevent a component in the direct current-to-alternating current converter circuit from being damaged due to overload. The direct current-to-alternating current converter circuit adjusts the maximum output power to a fourth power, where the fourth power is less than the first power, to ensure safe use of the component in the direct current-to-alternating current converter circuit.

In some embodiments of this application, when high voltage ride-through of different levels occurs in the power grid, the direct current-to-alternating current converter circuit may be controlled to keep external characteristics during high voltage ride-through for different duration. In other words, the duration within which the maximum output power is the first power is different. Specifically, when the voltage of the power grid increases to be greater than the first multiple of the rated voltage, the direct current-to-alternating current converter circuit adjusts the maximum output power to the first power within the first duration, and adjusts the maximum output power to the fourth power after the first duration. When the voltage of the power grid increases to be greater than the second multiple of the rated voltage, the direct current-to-alternating current converter circuit adjusts the maximum output power to the first power within second duration, and adjusts the maximum output power to the fourth power after the second duration. The first multiple is greater than the second multiple, and the first duration is less than the second duration. In other words, a higher high voltage ride-through level indicates shorter duration within which the direct current-to-alternating current converter circuit keeps the external characteristic during high voltage ride-through. For example, when the voltage of the power grid increases to more than 110% to 120% of the rated voltage, the direct current-to-alternating current converter circuit may keep adjusting the maximum output power to the first power for not less than 10s; when the voltage of the power grid increases to more than 120% to 125% of the rated voltage, the direct current-to-alternating current converter circuit may keep adjusting the maximum output power to the first power for not less than 1s; and when the voltage of the power grid increases to more than 125% to 130% of the rated voltage, the direct current-to-alternating current converter circuit may keep adjusting the maximum output power to the first power for not less than 500 ms.

Based on a same inventive concept, an embodiment of this application further provides an energy storage system, including an energy storage battery and the power converter provided in the foregoing embodiments of this application. The power converter is connected to the energy storage battery, and the power converter is configured to: convert electric energy provided by the energy storage battery into an alternating current and output the alternating current to a power grid or a load.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising a direct current-to-direct current converter circuit, a direct current bus, and a direct current-to-alternating current converter circuit, wherein
the direct current-to-direct current converter circuit is configured to perform voltage conversion on electric energy from a photovoltaic module or an energy storage battery and output a converted voltage to the direct current bus;
the direct current-to-alternating current converter circuit is configured to convert a bus voltage of the direct current bus into an alternating current voltage and output the alternating current voltage to a power grid;
the direct current-to-alternating current converter circuit is further configured to: when a voltage of the power grid is a rated voltage, control the bus voltage to be a first voltage; and when the voltage of the power grid increases to be greater than a first multiple of the rated voltage, control the bus voltage to increase from the first voltage to a second voltage; and
the direct current-to-direct current converter circuit is further configured to: when the voltage of the power grid increases to be greater than the first multiple of the rated voltage, adjust a maximum output power to a first power based on a control signal, and output a power within a range within which the power is less than or equal to the maximum output power, wherein
the first power is greater than a second power, and the second power is a maximum output power of the direct current-to-direct current converter circuit existing when there is no the control signal and the bus voltage is the second voltage.

2. The power converter according to claim 1, wherein the direct current-to-direct current converter circuit is further configured to: when the voltage of the power grid is the rated voltage and the bus voltage is the first voltage, control the maximum output power to be a third power, wherein the first power is greater than or equal to the third power.

3. The power converter according to claim 1 or 2, wherein the direct current-to-alternating current converter circuit is further configured to: when the voltage of the power grid increases to be greater than the first multiple of the rated voltage, send the control signal to the direct current-to-direct current converter circuit when the bus voltage is controlled to increase from the first voltage to the second voltage.

4. The power converter according to any one of claims 1 to 3, wherein the direct current-to-direct current converter circuit is further configured to: when the voltage of the power grid increases to be greater than a second multiple of the rated voltage, control the maximum output power to be the first power.

5. The power converter according to any one of claims 1 to 4, wherein the direct current-to-direct current converter circuit is further configured to: when the voltage of the power grid increases to be greater than the first multiple of the rated voltage, adjust the maximum output power to the first power within first duration, and adjust the maximum output power to a fourth power after the first duration, wherein the fourth power is less than the first power.

6. The power converter according to claim 5, wherein the direct current-to-direct current converter circuit is further configured to: when the voltage of the power grid increases to be greater than the second multiple of the rated voltage, adjust the maximum output power to the first power within second duration, and adjust the maximum output power to the fourth power after the second duration, wherein the first multiple is greater than the second multiple, and the first duration is less than the second duration.

7. An energy storage system, comprising an energy storage battery and the power converter according to any one of claims 1 to 6, wherein the power converter is connected to the energy storage battery, and the power converter is configured to: convert electric energy provided by the energy storage battery into an alternating current and output the alternating current to the power grid.

8. A control method for a power converter, comprising:
controlling, by a direct current-to-alternating current converter circuit in the power converter when a voltage of a power grid is a rated voltage, a bus voltage of a direct current bus in the power converter to be a first voltage; and
when the voltage of the power grid increases to be greater than a first multiple of the rated voltage, controlling, by the direct current-to-alternating current converter circuit, the bus voltage to increase from the first voltage to a second voltage; and adjusting, by a direct current-to-direct current converter circuit in the power converter, a maximum output power to a first power based on a control signal, and outputting a power within a range in which the power is less than or equal to the maximum output power, wherein
the first power is greater than a second power, and the second power is a maximum output power of the direct current-to-direct current converter circuit existing when there is no the control signal and the bus voltage is the second voltage.

9. The control method according to claim 8, further comprising:
controlling, by the direct current-to-direct current converter circuit when the voltage of the power grid is the rated voltage and the bus voltage is the first voltage, the maximum output power to be a third power, wherein the first power is greater than or equal to the third power.

10. The control method according to claim 8 or 9, further comprising:
sending, by the direct current-to-alternating current converter circuit when the voltage of the power grid increases to be greater than the first multiple of the rated voltage, the control signal to the direct current-to-direct current converter circuit when the bus voltage is controlled to increase from the first voltage to the second voltage.

11. The control method according to any one of claims 8 to 10, further comprising:
controlling, by the direct current-to-direct current converter circuit when the voltage of the power grid increases to be greater than a second multiple of the rated voltage, the maximum output power to be the first power.

12. The control method according to any one of claims 8 to 11, further comprising:
adjusting, by the direct current-to-direct current converter circuit when the voltage of the power grid increases to be greater than the first multiple of the rated voltage, the maximum output power to the first power within first duration, and adjusting the maximum output power to a fourth power after the first duration, wherein the fourth power is less than the first power.

13. The control method according to claim 12, further comprising:
adjusting, by the direct current-to-direct current converter circuit when the voltage of the power grid increases to be greater than the second multiple of the rated voltage, the maximum output power to the first power within second duration, and adjusting the maximum output power to the fourth power after the second duration, wherein the first multiple is greater than the second multiple, and the first duration is less than the second duration.
